# EUROPÄISCHE PATENTANMELDUNG

(11) **EP 1 988 354 A1**
(43) Veröffentlichungstag der Anmeldung: **05.11.2008**
(21) Anmeldenummer: 08450056.0
(22) Anmeldetag: 17.04.2008
(51) Int. Cl.: F28F 9/26

(54) **Verbindungselement**

(30) Priorität: 30.04.2007 AT 6772007
(71) Anmelder: Rettig ICC B.V., 6199 AA Maastricht-Airport (NL)
(72) Erfinder: Driesel, Henry, 98553 Schleusingen (DE); Grossmann, Hans-Jürgen, 98590 Rosa (DE)
(74) Vertreter: Wildhack, Helmut

(57) **Zusammenfassung**

Die Erfindung betrifft ein Verbindungselement zur Verbindung von zwei jeweils eine Öffnung zum Einführen bzw. Durchstecken dieses Verbindungselementes (1) aufweisenden Gegenständen, welches Verbindungselement (1) einen Schraubenschaft (2) mit Kopf (3), umfasst, wobei auf dem Schraubenschaft (2) eine Mutter (6) verdrehbar gelagert ist.

Erfindungsgemäß ist vorgesehen, dass auf dem Schraubenschaft (2) zwischen dem Kopf (3) und der Mutter (6) zumindest ein Aufrichtbauteil (7) verschiebbar gelagert ist, der beidseitig jeweils eine Aufrichtschrägfläche (8, 8') aufweist, und dass zwischen der einen Aufrichtschrägfläche (8) und dem Kopf (3) und der anderen Aufrichtschrägfläche (8') und der Mutter (6) rund um den Schraubenschaft (2) jeweils eine Anzahl von Spreizsegmenten (9) angeordnet ist, deren dem Aufrichtbauteil (7) zugekehrten Enden bei Annäherung des Kopfes (3) an die Mutter (6) durch Auflaufen auf die jeweilige Aufrichtschrägfläche (8, 8') vom Schraubenschaft (2) wegbewegt und aufgespreizt werden (Fig. 1).

## Beschreibung

Die Erfindung betrifft ein Verbindungselement gemäß dem Oberbegriff des Patentanspruches 1 sowie einen Röhrenradiator gemäß dem Oberbegriff des Patentanspruches 18.

Röhrenradiatoren umfassen prinzipiell eine Aneinanderreihung gleichartiger Elemente, die sogenannten Radiatorglieder bzw. Glieder, äußere Anschlusselemente, z.B. für Vor- und Rücklauf, Entlüftung, Entleerung sowie innere Einbauelemente, die den Fluss des Heizmediums steuern.

Seit Beginn des Einsatzes von Röhrenradiatoren vor ca. 100 Jahren besteht die Notwendigkeit, einzelne Glieder oder Teilblöcke, die bereits aus mehreren miteinander verbundenen Gliedern bestehen, miteinander zum anforderungsgerechten Gesamt-Radiatorblock druckdicht zu verbinden, sowie das Bestreben, dies auf möglichst einfache Weise zu tun.

Dazu wird in der Regel das sogenannte "Nippeln" durchgeführt. Dabei werden die Öffnungen der beiden miteinander zu verbindenden bzw. zu verschraubenden, Naben bzw. Anformungen der betreffenden Glieder oder Blockenden innenliegend mit einem Innengewinde ausgestattet. Das kann durch Einbringen bzw. Einschweißen von Gewinderingen geschehen, von denen - funktionsbedingt - der des einen zu verbindenden Blockelements Links- und der des anderen Rechtsgewinde haben muss. Dieses Einbringen der Gewinde muss noch vor dem Verschweißen von Kopfstück(halb)schalen zu den Kopf- bzw. Fußstücken und zusätzlich sortenrichtig erfolgen.

Mit einem "Nippel", einem speziellen, insbesondere hohlen Schraubelement, das von beiden Seiten her Außen-Links- und -Rechtsgewinde hat, werden die beiden zu verbindenden Blockelemente miteinander "vernippelt". Dabei wird der Nippel zunächst in das erste zu verbindende Element nur einen Gewindegang weit einmal an der oberen und einmal an der unteren Nabe eingeschraubt. Dann muss das zweite zu verbindende Element angesetzt werden, um mit einer ersten Drehung des Nippels den ersten Gewindegang auch dessen Gewindes zu fassen. Das Ansetzen und auch das verkantungsgefährdete Heranziehen des zweiten zu verbindenden Elementes gelingt nicht immer problemlos. Anschließend muss der Nippel bis zur Verpressung der Elemente gedreht werden. Mittels einer Nippelstange, die an ihrem vorderen Ende formschlüssig in den Nippel eingreift, wird der Schraubvorgang mittels aufwändigem und langwierigem Drehen jeweils mit nur einer Umdrehung abwechselnd oben und unten von außen her durchgeführt.

Die Dichtung zwischen den beiden Elementen legt sich um den Außendurchmesser des Nippels und hat nur begrenzte Breite und Dicke, da sie schlussendlich verpresst zwischen den beiden zu verbindenden Anformungen nicht mehr sichtbar, wohl aber druckdicht sein soll. Das stellt an die Planparallelität sowohl der aneinander liegenden Anformungen als auch an die Fluchtung der sich gegenüber stehenden Gewinde hohe Anforderungen. Diese Verbindungsart von Gliedern ist aufwendig und fehleranfällig.

Aufgrund der praktischen Unmöglichkeit, die kundenspezifische Wunsch- oder Änderungsvariante erst weiter hinten in der Lieferkette, z.B. beim Großhändler, Heizungsbauer oder gar erst vor Ort auf der Baustelle beim Endkunden, realisieren zu können, verbieten sich eine Vorrats-Lagerhaltung oder ein Verkauf von Röhrenradiatoren aus einem Lager fast vollständig.

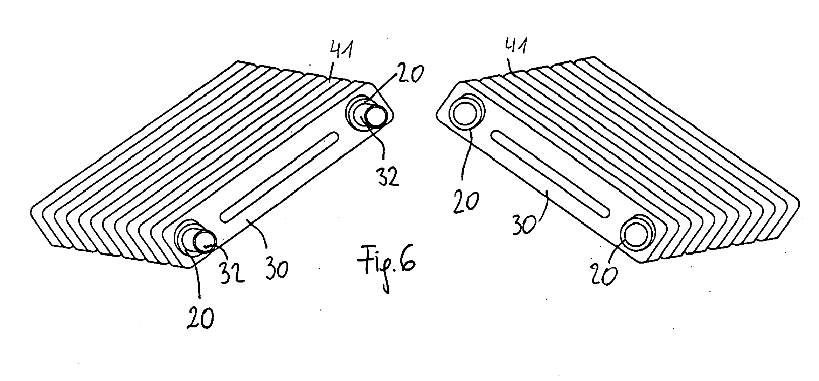

Fig. 6 zeigt eine Darstellung des Standes der Technik. Zwei Heizkörperblöcke 31 sollen verbunden werden. Dazu sind in entsprechende Gewinde an den Naben bzw. Anformungen 20 der endständigen Glieder 30 Schraubnippel 32 eingesetzt, die mit entsprechenden Innengewinden im anzuschließenden Block verschraubt werden müssen. Dazu werden Nippelstangen durch die von den Auswölbungen bzw. Anformungen gebildeten Kanäle durch den Block 31 durchgeführt und der jeweilige Schraubnippel 32 mit einer Nippelstange verdreht, sodass der sich verdrehende Nippel beiden Blöcke 41 aufeinander zuzieht bzw. die beiden Auswölbungen bzw. Anformungen 20 der beiden Blöcke 41 gegebenenfalls unter Zwischenlage einer Dichtung aneinander presst.

Die wesentliche Aufgabe der Erfindung ist es, eine Verbindungstechnik zu erstellen, die ohne das aufwendige Einbringen von - verwechslungsgefährdet unterschiedlichen - Gewinden oder anderen Zusatzelementen in die beiden jeweils zu verbindenden Glieder oder Blockelemente auskommt, die es gegebenenfalls ermöglicht, große Kräfte, ebenso sicher aufzunehmen wie die bisherige Nippeltechnik, die einfach und schnell in der Handhabung ist, die ein sicheres Dichtungsverhalten zeigt und gegebenenfalls klein baut, so dass gegebenenfalls sogar durch innere Einbauten hindurch genippelt werden kann.

Erfindungsgemäß ist ein diese Verbindungstechnik realisierendes Verbindungselement der eingangs genannten Art mit den im Kennzeichen des Anspruches 1 angeführten Merkmalen charakterisiert.

Prinzipiell ist das erfindungsgemäße Verbindungselement zur Verbindung von beliebigen Gegenständen geeignet, sofern diese eine Ausnehmung aufweisen, durch die das Verbindungselement hindurchgesteckt bzw. eingeführt werden kann. Bei derartigen Gegenständen bzw. Bauteilen handelt es sich insbesondere um plattenförmige Bauteile mit nicht allzu großer Dicke, wie z.B. Blechplatten, Glasplatten, Holzplatten od. dgl. Die erfindungsgemäßen Verbindungselemente können sowohl zum Zusammenhalten von Seitenwänden nebeneinander stehender Kästen als auch zum Zusammenhalten von Naben bzw. Anformungen von Röhrenradiatoren eingesetzt werden. Von Vorteil ist der Einsatz von erfindungsgemäßen Verbindungselementen dann, wenn gleichzeitig mit dem Zusammenpressen der beiden miteinander zu verbindenden Gegenstände eine gewisse Dichtwirkung erreicht werden soll, da dies durch den vorgesehenen Aufrichtbauteil und/oder eine von diesem getragene Dichtung einfach erreicht werden kann.

Im Folgenden wird die Erfindung insbesondere anhand von Röhrenheizkörpern erläutert. An Stelle der entsprechenden mittels des Verbindungselementes unter Druckausübung zusammengepressten Teilen von Gliedern können in derselben Weise auch beliebige andere plattenförmige Bauteile mit entsprechenden Ausnehmungen, durch die die Verbindungselemente durchgeführt werden können, verbunden werden.

Abgesehen von seiner Festigkeit, Dichtigkeit, Stabilität und Einfachheit seiner Erstellung ermöglicht das erfindungsgemäße Verbindungselement bzw. die damit vorzunehmende Verbindungstechnik, dass Röhrenradiatoren nunmehr lagerhaltungsfähig sind, da ein einfacher, schneller und sicherer Zusammenbau sowohl beim Hersteller als auch beim Kunden bzw. auf der Baustelle möglich wird. Des weiteren ist eine nachträgliche Veränderung des Produktes, z.B. eine Verlängerung des Heizkörpers, ohne größere Schwierigkeiten möglich. Des weiteren wird es einfach möglich, kundenspezifische Wünsche in Hinblick auf Baugröße, Anschlussvarianten, Ventilausstattung rasch zu erledigen. Die Verbindungsstellen bedürfen keiner speziellen Vorbehandlung bzw. Bearbeitung und die Verbindung von Heizkörperblöcken ist rasch durchzuführen. Im Wesentlichen gelten die obigen Ausführungen für eine Vielzahl von zu verbindenden Gegenständen, z.B. Schrankkästen, die mit den erfindungsgemäßen Verbindungselementen ebenfalls rasch und sicher zu verbinden sind, wobei die Verbindung jedoch auch wieder leicht lösbar ist.

Sobald das Verbindungselement in die in den zu verbindenden Gegenständen ausgebildeten Ausnehmungen eingeführt ist, kann durch Verdrehen der Mutter gegenüber dem Kopf bzw. umgekehrt, eine Annährung der Spreizsegmente an den Aufrichtbauteil erreicht werden, wodurch die Spreizelemente sich aufstellen und gegen die Flächen der zu verbindenden Gegenstände drücken.

Für die Verwendung von Vorteil ist die Ausbildung eines Verbindungselementes gemäß Anspruch 2, da damit auf eine bestimmte Lage des Verbindungselementes nicht Rücksicht genommen werden muss.

Für ein Rückstellen der Spreizsegmente für den Fall eines Lösens der Verbindung bzw. den Zusammenhalt eines Verbindungselementes vor dessen Einsatz sind die Merkmale des Anspruches 3 von Vorteil. Gleichzeitig ergibt sich ein sicheres Festhalten der Spreizsegmente am Schraubenschaft.

Um ein Auflaufen bzw. Spreizen der Spreizsegmente einfach zu ermöglichen, sind die Merkmale des Anspruches 4 vorgesehen. Um das Einsatzgebiet des erfindungsgemäßen Verbindungselementes groß zu halten, sind die Merkmale des Anspruches 3 vorgesehen, die insbesondere für den Einsatz des erfindungsgemäßen Verbindungselementes für Dichtzwecke zweckmäßig sind.

Eine einfache Montage in entsprechende Ausnehmungen von Gegenständen ist mit den Merkmalen des Anspruches 6 möglich.

Ein stabiler Aufbau des Verbindungselementes ergibt sich mit den Merkmalen des Anspruches 7. Damit wird auch eine gute Abstützung der Spreizsegmente an den druckzubelastenden Gegenständen erreicht. Eine gute Druckbelastung der Spreizsegmente bzw. gutes Anliegen der Spreizsegmente am Kopf bzw. an der Mutter wird mit den Merkmalen des Anspruches 8 gewährleistet. Des weiteren wird das Aufspreizen der Spreizsegmente erleichtert.

Ein stabiler und kompakter Aufbau des Erfindungselementes ergibt sich mit den Merkmalen des Anspruches 9.

Zur Montage von bzw. zum Einsatz in Heizkörpern ist es von Vorteil, wenn die Merkmale des Anspruches 10 verwirklicht sind, da damit die Verbindung der Auswölbungen bzw. Anformungen einfach erfolgen kann.

Ein erfindungsgemäßer Röhrenradiator ist mit den im Anspruch 12 angeführten Merkmalen charakterisiert.

Die Merkmale des Anspruches 13 und/oder des Anspruches 14 ermöglichen eine gute Abstützung der Spreizsegmente an der zylindrischen Umfangsfläche, sodass der Druck der Spreizsegmente auf die Stirnflächen in Gebrauchsstellung optimiert bzw. maximiert werden kann. Ferner kann damit auch der Aufrichtbauteil zur Abdichtung der Ausnehmungen eingesetzt werden.

Zur Erreichung einer entsprechenden Dichtwirkung bzw. eines Dichtdruckes können die Merkmale des Anspruches 15 von Vorteil sein.

Von Vorteil beim Einsatz der Verbindungselemente können die Merkmale des Anspruches 11 sein. Sofern eine Umfangswandung, wie bei Röhrenradiatoren ausgebildet, nicht vorhanden ist, kann dieser Ring die vom Kopf bzw. von der Mutter auf die Spreizsegmente ausgeübten Kräfte in Richtung auf die zu verbindenden Gegenstände umleiten, da der Ring das Aufspreizen der Spreizsegmente über das durch seinen Innenumfang gegebene Maß verhindert.

Im Folgenden wird die Erfindung anhand eines Ausführungsbeispiels näher erläutert.

Fig. 1 zeigt ein erfindungsgemäßes Verbindungselement in Seitenansicht. Fig. 2 zeigt ein zwei Glieder von Röhrenradiatoren verbindendes Verbindungselement im Schnitt. Fig. 3 zeigt ein in eine Nabe bzw. Auswölbung eines Röhrengliedes eingesetztes Verbindungselement im Schnitt. Fig. 4a und 4b zeigen Ansichten von Spreizsegmenten. Fig. 5 zeigt schematisch ein Verbindungselement mit einem die Spreizelemente umgebenden Ring.

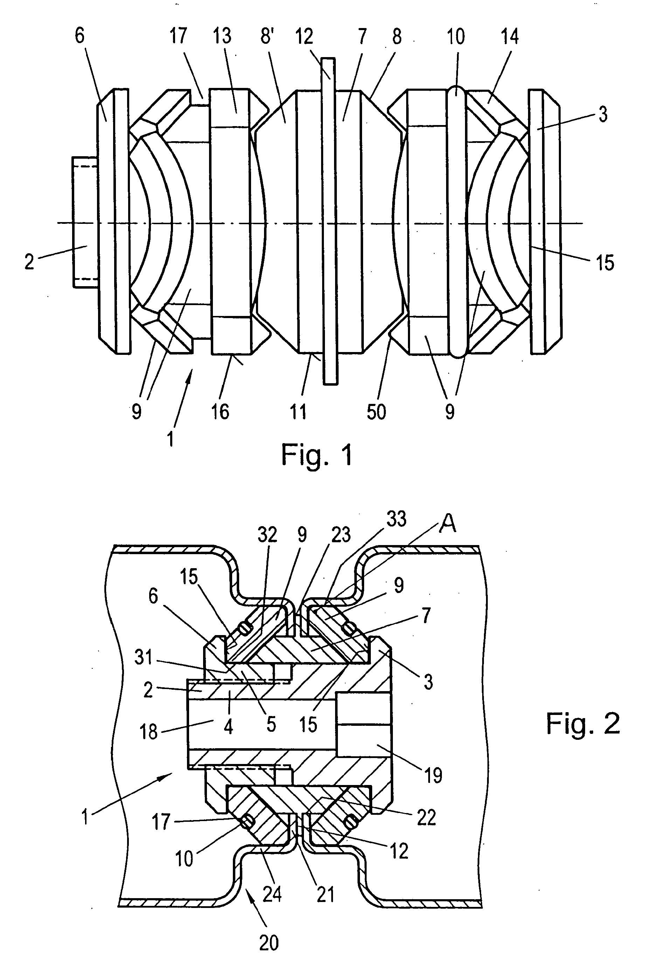

Fig. 1 zeigt eine Seitenansicht eines erfindungsgemäßen Verbindungselementes, das einen durchgehenden Schraubenschaft 2 mit einer am Ende des Schraubenschaftes angeordneten Kopf 3 umfasst. Auf diesen Schraubenschaft 2 ist eine Mutter 6 aufschraubbar. Sowohl der Kopf 3 als auch die Mutter 6 können mit jeweils einem Bund 4 bzw. 5 versehen sein, so wie dies in Fig. 2 schematisch dargestellt ist. Diese Ringbünde 4 bzw. 5 können an den Kopf 3 bzw. die Mutter 6 angeformt sein oder von getrennten Bauteilen gebildet sein. Zwischen dem Kopf 3 und der Mutter 6 ist auf dem Schraubenschaft 2 ein Aufrichtbauteil 7 verschiebbar gelagert. Der Aufrichtbauteil besitzt zwei Aufrichtschrägflächen 8 bzw. 8', die geneigt, vorzugsweise im Winkel von 40 bis 50°, insbesondere 45°, zum Schraubenschaft 2 verlaufen und auf den Kopf 3 bzw. auf die Mutter 6 hin gerichtet sind.

Zwischen dem Aufrichtbauteil 7 und dem Kopf 3 und dem Aufrichtbauteil 7 und der Mutter 6 liegen Spreizsegmente 9, welche um den Umfang des Schraubenschaftes 2 bzw. der Bünde 4 bzw. 5 verlaufen und mit ihren Innenflächen, so wie in Fig. 1 dargestellt, an dem Bund 4 bzw. 5, insbesondere mit ihren Mittenbereichen, anliegen. Vorteilhafterweise sind zumindest drei und maximal sechs Spreizsegmente 9 vorgesehen. Diese einzelnen Schraubensegmente 9 sind mit einem Halteteil 10, z.B. einem elastisch dehnbaren Gummiring, zusammengehalten, der in einer umlaufenden Nut 17 von den Spreizsegmenten 9 aufgenommen wird.

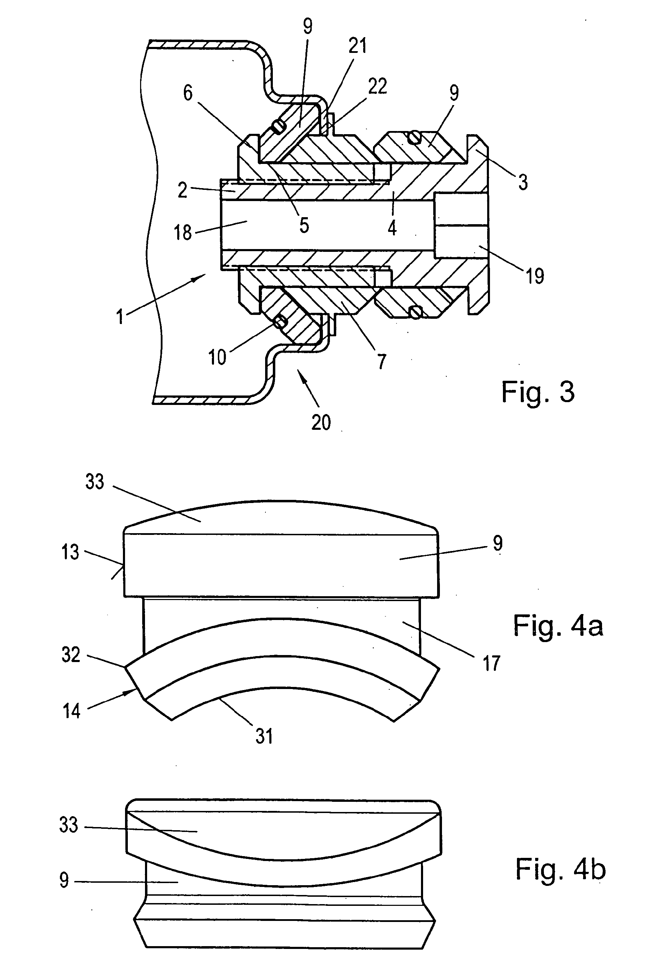

Man erkennt, dass die Spreizsegmente 9 Endflächen 30 besitzen, die im Winkel zum Schraubenschaft 2 geneigt verlaufen, welcher Winkel in etwa dem Neigungswinkel der Aufrichtflächen 8, 8' entspricht. Es ist damit möglich, bei einer Annäherung des Kopfes 3 an die Mutter 6 durch ein Aufschrauben der Mutter 6 auf den Schraubenschaft 2 die Spreizsegmente 9 durch Auflaufen an die Aufrichtflächen 8, 8' zu spreizen. Durch die 3-dimensionale Ausbildung der Endflächen der Spannsegmente wird im gespannten Zustand maximale Kraftübertragung durch flächige Anlage an den zu verpressenden Flächen und den Bunden ermöglicht. Dieser Spreizvorgang wird anhand der Fig. 2 und 3 näher erläutert.

Der Aufrichtbauteil 12 kann, insbesondere in seinem Mittenbereich, einen von seinem Umfang 12 abgehenden, einstückig angeformten oder aufgesetzten Ring 12 aufweisen, der als Anschlagring und/oder Dichtring ausgebildet sein kann. Der Radius der zylindrischen Umfangsfläche 11 des Aufrichtbauteiles 7 ist mindestens so groß wie der Radius der Umfangsfläche 16 der dem Aufrichtbauteil 7 zugewandten Endbereiche 13 der Spreizsegmente 9 und nicht größer als der Durchlass-Radius der Ausnehmung 22.

Die der Mutter 6 bzw. dem Kopf 3 zugewandten Endbereiche 14 der Spreizsegmente 9 besitzen in der gezeigten Ausgangsstellung des Verbindungselementes 1 einen Radius der maximal so groß ist wie der Radius des Aufrichtbauteils 7 bzw. der Durchlass-Radius der Ausnehmung 22.

Gemäß Fig. 2 ist das erfindungsgemäße Verbindungselement in Naben bzw. Anformungen 20 von endständigen Gliedern 30 eines Röhrenradiators 31 (Fig. 6) eingesetzt. Durch ein Aufschrauben der Mutter 6 mit Bund 5 auf den Schraubenflansch 2 wurden vom Aufrichtbauteil 7 die Spreizsegmente 9 aufgespreizt und stützen sich an der jeweiligen Innenwandfläche einer Umfangsfläche 24 und einer Stirnfläche 23 der Nabe 20 des jeweiligen Röhrengliedes 30 ab. Durch den von Spreizsegmenten 9 auf die beiden ringförmigen Flanschteile 21 ausgeübten Druck werden diese Ringflansche 21 aneinandergedrückt und die Glieder 30 fest miteinander verbunden. Die Stirnflächen 23 der ringförmigen Flanschteile 21 pressen den dazwischen angeordneten Dichtring 12 zusammen, sodass die Verbindung fluiddicht ist. Gleichzeitig wird durch den Druck der Spreizsegmente 9 auf die Aufrichtschrägflächen 8 bzw. 8' der aus elastisch verformbaren Material bestehende Aufrichtbauteil 7 gegen die Innenumfangsflächen 22 der beiden ringförmigen Flanschteile 21 gedrückt, sodass auch der Aufrichtbauteil 7 zur Abdichtung der Verbindung der Glieder 30 Beitrag leistet.

Man erkennt aus Fig. 2, dass der Schraubflansch 2 mit dem Kopf 3 und dem Bund 4 einstückig ausgebildet ist. Im Schraubflansch 2 kann eine vorteilhafterweise zylindrische Ausnehmung 18 zum Fluiddurchtritt ausgebildet sein. Des weiteren kann eine Werkzeugaufnahme 19, insbesondere für eine Nippelstange, im Schraubschaft 2 ausgebildet werden, wenn der Schraubflansch 2 mit einer Nippelstange zur Verbindung von zwei Heizkörperblöcken verdreht werden soll.

Die dem Aufrichtbauteil zugekehrten Endbereiche 13 der Spreizsegmente besitzen eine räumliche Ausbildung/Ausformung, insbesondere Endflächen, die einen Winkel ausbilden, die der Ausformung/Ausbildung, insbesondere dem Winkel der Anlageflächen entspricht, die (den) die Innenwandfläche der Nabe 20 ausbildet, gegen die die Spreizsegmente 9 angedrückt werden sollen; im Fall der Fig. 2 ist dies ein rechter Winkel (A), da die Innenwandflächen der Umfangsflächen 24 und der Stirnfläche 23 miteinander diesen rechten Winkel (A) einschließen.

Es ist des weiteren vorgesehen, dass die der Mutter 6 und dem Bund 3 zugekehrten Endbereiche bzw. Endflächen 15 der Spreizsegmente 9 jeweils eine gekrümmte Fläche ausbilden bzw. diese Krümmung einer Zylinderfläche entspricht, welche an die Umfangsfläche des Bundes 4 bzw. 5 angepasst ist, und zwar in einer aufgespreizten Stellung der Spreizsegmente 9, die für die jeweilige Gebrauchslage des Verbindungselementes 1 als vorteilhaft angesehen wird. Man erkennt aus Fig. 2, dass die Endbereiche 14 der Spreizsegmente 9 einerseits satt an der Stirnfläche 15 des Kopfes 3 bzw. der Mutter 6 anliegen, d.h. miteinander einen Kreisring ausbilden. Ferner weisen die nach innen weisenden Endflächen 31 dieser Endbereiche 14 der Spreizsegmente 9 eine zylindrische Umfangsfläche auf, welche der Umfangsfläche des Bundes 4 bzw. 5 entspricht. Damit wird eine optimale Anlage bzw. Druckaufbringung erreicht.

In Fig. 3 zeigt, dass nach dem Einstecken eines Verbindungselementes in eine Ausnehmung 22 in dem ringförmigen Flanschteil 21 allein durch eine händisch vorzunehmende Annäherung der Schraube 65 an den Aufrichtbauteil 7 aufgrund eines Abgleitens der Innenumfangsfläche des Aufrichtbauteiles 7 auf der Außenumfangsfläche des Bundes 5 ein Aufrichten der Spreizsegmente 9 erreicht werden kann, womit eine stabile Lage des Verbindungselementes 1 in Bezug auf die Auswölbung bzw. Anformung 20 erreicht wird. Es ist damit möglich, ein weiteres Röhrenglied 30 oder einen Block von Gliedern 30 auf das derart festgelegte Verbindungselement 1 aufzusetzen bzw. das Verbindungselement in die Ausnehmung 22 dieses anzuschließenden Röhrengliedes bzw. Gliederblockes einzuführen und dann die durch die andere Seite dieses Röhrengliedes bzw. Röhrenblockes befindliche Ausnehmung 22 ein Nippel- bzw. Schraubwerkzeug einzuführen, das in die Ausnehmung 19 eingreift und mit dem der Kopf 3 mit dem Schraubschaft 2 gegenüber der Mutter 6, die bereits festsitzt, verdreht werden kann.

Nach dem Ansetzen des anzuschließenden Röhrengliedes 20 wird somit mit dem Werkzeug die Schraubverbindung des Verbindungselementes in einem Zug angezogen. Dabei werden die Spreizsegmente in den beiden zu verbindenden Gegenständen aufgerichtet, weil sie an den Aufrichtschrägflächen emporgleiten. D.h. auch dann, wenn nur einer der beiden zu verbindenden Gegenstände für den Spannvorgang zugänglich ist.

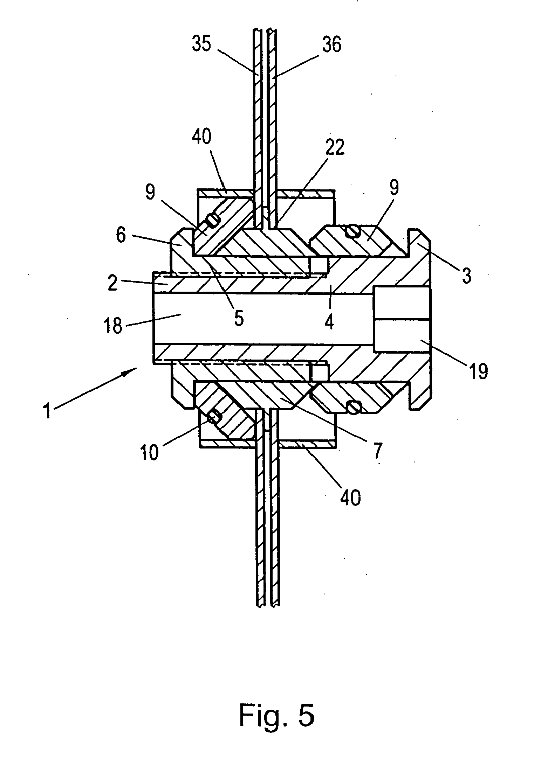

Fig. 4a zeigt ein Spreizsegment 9 in einer Draufsicht in Ausgangslage. Fig. 4b zeigt eine Draufsicht eines Spreizsegmentes 9 in Einbaulage. Man erkennt die Verkürzung des Spreizelementes 9 in Einbaulage, die durch den Spreizwinkel bedingt ist. Des weiteren erkennt man die Anlagefläche 33 mit der sich die Spreizsegmente 9 an der Innenwandung der Umfangsfläche 24 oder allenfalls an einem vorgesehenen Ring 40 (Fig. 5) abstützen können.

Fig. 5 zeigt eine Ausführungsform, bei der mittels eines erfindungsgemäßen Verbindungselementes 1 zwei plattenförmige Gegenstände 35, 36 unter Druck zusammengehalten werden. Diese plattenförmigen Gegenstände 35, 36 weisen jeweils eine Ausnehmung 22 auf, durch die ein erfindungsgemäßes Verbindungselement durchgesteckt werden kann. Die Anordnung entspricht im Wesentlichen der Anordnung gemäß Fig. 2. Unterschiedlich ist jedoch, dass bei einer Verbindung von derartigen, z.B. plattenförmigen, Gegenständen 35 und 36 keine Nabe 20 mit einer entsprechenden Umfangswandung 24 bzw. Stirnfläche 23 vorhanden ist, gegen die sich die Spreizsegmente 9 abstützen können.

Um die Druckkraft der Spreizsegmente 9 in axialer Richtung des Schraubenschaftes 2 zu richten bzw. ein Aufspreizen nach außen zu verhindern, kann an Stelle der Anordnung einer Umfangswandung 24 wie es bei einer Auswölbung bzw. der Nabe 20 eines Röhrengliedes 30 der Fall ist, der Ring 40 mit vorgegebenem Durchmesser vorgesehen sein, so wie dies aus Fig. 5 ersichtlich ist. Dieser Ring 40 verhindert ein beliebig weites Aufspreizen der Spreizsegmente 9 bzw. lenkt den vom Kopf 3 bzw. von der Mutter 6 auf die Spreizsegmente 9 ausgeübten Druck zum Teil in eine Richtung, die parallel zur Längsachse des Schraubenschaftes 2 ist. Damit erfolgt ein Zusammenpressen der zwischen den Spreizsegmenten 9 liegenden beiden Bauteilen 35, 36.

Der Ring 40 kann aus Kunststoff oder Metall gefertigt sein. Der Durchmesser des Ringes 40 ist größer als der Durchmesser des Verbindungselementes 1 im Ruhezustand, jedoch kleiner als der bzw. entspricht dem maximale(n) vorgegebene(n) Spreizwinkel der Spreizsegmente 9. Ein derartiger Ring 40 ist somit dann als integrierendes Zusatzelement für ein erfindungsgemäßes Verbindungselement 1 vorzusehen, wenn ein Einbau des Verbindungselementes 1 vorzunehmen ist, bei dem entsprechende Abstützflächen für die Spreizsegmente 9 zur Aufnahme von radialen Kraftkomponenten fehlen.

Die Querschnittsform der Innenwandfläche der Auswölbungen 20 bzw. des Ringes 40 kann beliebig sein bzw. an den Umfang der aufgespreizten Spreizelemente 9 angepasst sein. Vorteilhafterweise liegen die Umfangsflächen 33 der Spreizsegmente 9 satt an der Innenwandfläche des Ringes 40 bzw. Innenfläche der Umfangswandung 24 an. Vorteilhafterweise sind die Umfangswandung 24 bzw. die Innenwandflächen zylindrisch bzw. rotationssymmetrisch mit demselben Radius ausgebildet, den die Umfangsflächen 33 in der vorgegebenen maximalen Spreizstellung ausbilden.

Es könnte allerdings auch vorgesehen sein, dass die Spreizsegmente 9 in aufgespreizter Form quadratische oder einem Vieleck entsprechende Erstreckung aufweisen und entsprechend ein Ring oder eine Auswölbung mit angepasstem Umfang zur Kraftaufnahme vorgesehen ist.

Die Ausnehmung 19 oder auch entsprechende Anformungen im Kopf 3 können eine vorgegebene Weite für entsprechende Schlüssel aufweisen. Prinzipiell können auch entsprechende Aus- bzw. Anformungen für Werkzeuge an der Schraube 6 ausgebildet sein.

Die Form des Ringbauteiles 12, der den Aufrichtbauteil 7 umgibt, kann an die zu verbindenden Gegenstände angepasst sein; an sich kann dieser Ringbauteil 12 auch entfallen.

In "entspannter" Montagelage ist der Abstand zwischen Kopf 3 und Mutter 6 so groß, dass die Spannsegmente 9 am Schraubschaft 2 bzw. an den Bünden 4, 5 anliegen, um leicht in die Ausnehmungen 22 eingeführt werden zu können.

Die Kraftkomponente in axialer Richtung wird maßgeblich bestimmt durch den Winkel der Aufspreizung der Spannsegmente in gespannter Lage. Je flacher die Aufrichtung ist, desto höher ist die axiale Spannkraft, allerdings erkauft mit einer größeren Einbaulänge des Verbindungselementes in dessen Montagelage. Je größer der Spreizwinkel ist, desto kürzer ist die Baulänge, aber desto stärker auch die radiale, nach außen gegen die Hülse der zu verbindenden Gliedern bzw. den Ring 40 gerichtete Kraft.

Bei der Montage des Verbindungselementes 1 wird der Ring 40 um das Verbindungselement herum angeordnet und wird beim Aufspreizen der Spreizsegmente 9 in die entsprechende Umfangslage um das Verbindungselement herum gebracht, sodass sich die Spreizsegmente 9 gleichmäßig über den Ring 40 abstützen können.

Die Verbindung ist zerstörungsfrei lösbar, da die Spreizsegmente 9 beim Lösen des zusammengeschraubten Verbindungselementes 1 wieder in ihre Ausgangs- bzw. Montagelage zurückgeführt werden können. Dazu können zusätzlich, z.B. nutförmige Ausformungen auf dem Außendurchmesser von Kopf 3 und/oder Mutter 6 bzw. den Spreizsegmenten 9 dienen, falls nicht die gewählten Materialien im Zusammenwirken mit der Kraft des Halteringes 10 das Zurückführen schon von alleine bewirken.

Von Vorteil ist es, wenn der Umfang bzw. Außendurchmesser des Aufrichtbauteils 7 zumindest so groß ist wie der Umfang bzw. der Außendurchmesser der dem Aufrichtbauteil 7 nahen und dem Schraubenschaft 2 anliegenden Endbereiche 13 der Spreizsegmente 9. Von Vorteil ist es, wenn der Außendurchmesser des Aufrichtbauteils 7 im Zusammenwirken mit seiner Länge gewährleistet, dass die Spreizsegmente 9 bei ihrem Aufspreizen nach ihrem Abheben vom Aufrichtbauteil 7 anschließend an den verspannenden bzw. verbindenden Gegenständen weiter aufgleiten können bis zum Abstützen an der Nabe 20 oder einem Ring 40.

## Patentansprüche

1. Verbindungselement zur Verbindung von zwei jeweils eine Öffnung zum Einführen bzw. Durchstecken dieses Verbindungselementes (1) aufweisenden Gegenständen, welches Verbindungselement (1) einen Schraubenschaft (2) mit Kopf (3), gegebenenfalls mit Bund (4), umfasst, wobei auf dem Schraubenschaft (2) eine, vorzugsweise mit einem Bund (5) versehene, Mutter (6) verdrehbar gelagert ist, **dadurch gekennzeichnet,**
- **dass** auf dem Schraubenschaft (2) zwischen dem Kopf (3) und der Mutter (6) zumindest ein Aufrichtbauteil (7) verschiebbar gelagert ist, der beidseitig, das heißt auf seiner dem Kopf (3) und auf seiner der Mutter (6) zugewandten Seite, jeweils eine, insbesondere kegelstumpfmantelförmig ausgebildete, Aufrichtschrägfläche (8, 8') aufweist, und
- **dass** zwischen der einen Aufrichtschrägfläche (8) und dem Kopf (3) und der anderen Aufrichtschrägfläche (8') und der Mutter (6) rund um den Schraubenschaft (2) jeweils eine Anzahl von Spreizsegmenten (9) angeordnet ist, deren dem Aufrichtbauteil (7) zugekehrten Enden bei Annäherung des Kopfes (3) an die Mutter (6) durch Auflaufen auf die jeweilige Aufrichtschrägfläche (8, 8') vom Schraubenschaft (2) wegbewegt und aufgespreizt werden.

2. Verbindungselement nach Anspruch 1, **dadurch gekennzeichnet, dass** das Verbindungselement (1) bezüglich der Spreizsegmente (9) und/oder des Aufrichtbauteils (7) in Hinblick auf eine durch den Aufrichtbauteil (7) senkrecht zu dem Schraubenschaft (2) verlaufende Mittelebene gleich bzw. symmetrisch aufgebaut ist.

3. Verbindungselement nach Anspruch 1 oder 2, **dadurch gekennzeichnet, dass** die Spreizsegmente (9) von zumindest einem elastisch aufweitbaren Haltering (10), z.B. O-Ring oder Federring, umgeben bzw. in ihre am Schraubenschaft (2) anliegende Stellung gedrückt sind, wobei gegebenenfalls in den Spreizsegmenten (9) eine umlaufende Nut (17) zur Aufnahme des Halteringes (10) ausgebildet ist.

4. Verbindungselement nach einem der Ansprüche 1 bis 3, **dadurch gekennzeichnet, dass** der Aufrichtbauteil (7) eine zylindrische Umfangsfläche (11) aufweist, an die beidseits die in Richtung auf den Schraubenschaft (2) hin abfallend geneigten Aufrichtschrägflächen (8, 8') anschließen, die gegebenenfalls auf mit dem Aufrichtbauteil (7) einteiligen Anschlussteilen gelegen sind oder in Form eines Drahtkorsetts als Aufricht-Stützkonstruktion ausgebildet sind.

5. Verbindungselement nach einem der Ansprüche 1 bis 4, **dadurch gekennzeichnet, dass** der Aufrichtbauteil (7) aus elastisch verformbarem Material gebildet ist und/oder der Aufrichtbauteil (7) mit Dichtungsmaterial gegen Wasserdurchtritt, z.B. aus Gummi oder Kunststoff, gebildet ist und/oder dass der Aufrichtbauteil (7), insbesondere in seinem Mittenbereich, einen vorzugsweise einstückig mit ihm ausgebildeten bzw. an ihm angeformten Ring (12), insbesondere aus Dichtmaterial gegen Wasserdurchtritt, trägt.

6. Verbindungselement nach einem der Ansprüche 1 bis 5, **dadurch gekennzeichnet, dass** der Umfang bzw. Außendurchmesser des Aufrichtbauteils (7) zumindest so groß ist wie der Umfang bzw. der Außendurchmesser der dem Aufrichtbauteil (7) nahen und dem Schraubenschaft (2) anliegenden Endbereiche (13) der Spreizsegmente (9).

7. Verbindungselement nach einem der Ansprüche 1 bis 6, **dadurch gekennzeichnet, dass** vom Kopf (3) des Schraubenschaftes (2) und/oder von der Mutter (6) ein auf den Aufrichtbauteil (7) hin gerichteter Ringbund (4, 5) abgeht bzw. damit einstückig ausgebildet ist, auf dem die jeweiligen Spreizsegmente gelagert sind bzw. an dem diese anliegen und/oder dass die der Mutter (6) bzw. dem Kopf (3) nahen Endbereiche (14) der jeweiligen Spreizsegmente (9) in einer vorgegebenen aufgespreizten Stellung, insbesondere in der maximalen Spreizstellung bzw. Endstellung in Gebrauchslage, mit ihrer Stirnfläche (15) am Kopf (3) bzw. an der Mutter (6) anliegen bzw. mit ihren Endbereichen (14) in dieser Stellung aneinander anliegen und einen umlaufenden Ringteil ausbilden.

8. Verbindungselement nach einem der Ansprüche 1 bis 7, **dadurch gekennzeichnet, dass** die dem Aufrichtbauteil (7) nahen Enden (13) der Spreizsegmente (9) in ihrer an dem Schraubenschaft (2) bzw. dem jeweiligen Ringbund (4, 5) anliegenden Stellung eine zylindrische Umfangsfläche (16) bzw. einen, insbesondere durchgehenden, Ringteil ausbilden bzw. aneinander anliegen und/oder dass die dem Kopf (3) bzw. der Mutter (6) zugewandten Enden der Aufrichtschrägflächen (8, 8') einen geringeren Abstand vom Schraubenschaft (2) aufweisen als die dem Aufrichtbauteil (7) zugewendeten Enden der Spreizsegmente (9) und/oder dass die dem Schraubenschaft (2) und dem Aufrichtbauteil (7) zugekehrten Endflächen (50) der Spreizsegmente (9) geneigt ausgebildet sind und dieser Neigungswinkel dem Neigungswinkel der Aufrichtschrägflächen (8, 8') entspricht.

9. Verbindungselement nach einem der Ansprüche 1 bis 8, **dadurch gekennzeichnet, dass** die Spreizsegmente (9) in ihrem Mittenbereich in ihrer am Schraubenschaft (2) bzw. an dem jeweiligen Ringbund (4, 5) anliegenden Stellung, insbesondere auch in ihrem dem Aufrichtbauteil (7) nahen Endbereich, ohne Zwischenraum aneinander anliegen.

10. Verbindungselement nach einem der Ansprüche 1 bis 9, **dadurch gekennzeichnet, dass** der Schraubenschaft (2) eine durchgehende, insbesondere zylindrische, Längsausnehmung (18) und/oder eine Aufnahme (19) für ein Werkzeug aufweist.

11. Verbindungselement nach einem der Ansprüche 1 bis 10, **dadurch gekennzeichnet, dass** dem Verbindungselement ein Ringbauteil (40), insbesondere mit kreisförmiger Querschnittsfläche oder einer einem gleichseitigen Vieleck entsprechenden Querschnittsfläche, dessen Eckenanzahl der Anzahl der anzulegenden Spreizelemente entspricht, zugeordnet ist, dessen Innenabmessung größer als der Umfang des Aufrichtbauteils (7) bzw. der Spreizsegmente (9) ist, jedoch kleiner ist als der (die) von den Enden der Spreizsegmente (9) beschriebene Umfang bzw. Fläche in einer vorgegebenen maximalen Spreizstellung.

12. Röhrenradiator, bei dem die einzelnen Glieder, vorzugsweise in ihren oberen und/oder unteren Endbereichen, insbesondere beidseitig, napfartige bzw. hülsenförmige Naben bzw. Anformungen (20) aufweisen, deren von einem Flanschteil (21) gebildete Stirnfläche (23) eine Ausnehmung (22) aufweist, wobei die einzelnen Glieder bzw. Blöcke von Gliedern mit Verbindungselementen zusammengehalten sind, **dadurch gekennzeichnet, dass** Verbindungselemente (1) gemäß einem der Ansprüche 1 bis 11 die Ausnehmungen (22) von zwei benachbarten bzw. aneinander liegenden Auswölbungen bzw. Anformungen (20) von benachbarten bzw. zu verbindenden Gliedern durchsetzen und die Flanschteile (21) der beiden Glieder gegeneinander drücken.

13. Röhrenradiator nach Anspruch 12, **dadurch gekennzeichnet, dass** die Ausnehmungen (22) kreisförmig und in einer kreisförmigen Stirnfläche (23) ausgebildet sind und/oder dass die napf- bzw. hülsenförmigen Auswölbungen (20) eine annähernd zylindrische Umfangswandung (24) aufweisen, an die die Stirnfläche (23) mit der Ausnehmung (22) anschließt.

14. Röhrenradiator nach Anspruch 12 oder 13, **dadurch gekennzeichnet, dass** die insbesondere ringförmigen Flanschteile (21) beidseits eines vom Aufrichtbauteil (7) abgehenden bzw. von diesem getragenen Dichtringes (12) angeordnet sind und von außen von beiden Seiten her in Richtung auf den Dichtring (12) mit den beidseits des Aufrichtbauteiles (7) gelegenen Spreizsegmenten (9) druckbelastet sind und/oder dass die dem Aufrichtbauteil (7) nahen Endbereiche (13) der Spreizsegmente (9) im Eck- bzw. Übergangsbereich von der, vorzugsweise zylindrischen, Umfangsfläche (24) in die daran anschließende und insbesondere senkrecht zur Umfangsfläche (24) verlaufende Stirnfläche (23) abgestützt sind.

15. Röhrenradiator nach einem der Ansprüche 12 bis 14, **dadurch gekennzeichnet,**
- **dass** durch Druckbelastung durch die Spreizsegmente (9) der elastisch verformbare Aufrichtbauteil (7) in seinem Mittelbereich umfangsvergrößert und zumindest an die Innenumfangsfläche der Ausnehmungen (22) in den beiden zu verbindenden Auswölbungen (20) angepresst ist und/oder,
- **dass** die Spreizelemente (9) mit dem Schraubenschaft (2) in der vorgegebenen Anlageendstellung an die bzw. in Verbindungsstellung der Auswölbungen (20) einen Winkel zwischen 30° bis 60°, vorzugsweise 40° bis 50°, einschließen und/oder dass der Abstand zwischen der Umfangsfläche (24) und dem Schraubenschaft (2) oder dem jeweiligen Ringbund (4, 5) kleiner ist als die Länge der Spreizsegmente (9) und vorzugsweise das 0,5- bis 0,9-fache, insbesondere das 0,6- bis 0,8-fache, dieses Abstandes beträgt.
